# EUROPÄISCHE PATENTSCHRIFT

(11) **EP 2 819 820 B1**
(45) Veröffentlichungstag und Bekanntmachung des Hinweises auf die Patenterteilung: **15.01.2020**
(21) Anmeldenummer: 13708728.4
(22) Anmeldetag: 27.02.2013
(51) Int. Cl.: B29C 33/42

(54) **OBERFLÄCHENELEMENT MIT WENIGSTENS EINEM STRUKTURIERTEN OBERFLÄCHENBEREICH, INSBESONDERE FÜR EIN KRAFTFAHRZEUG**
SURFACE ELEMENT HAVING AT LEAST ONE STRUCTURED SURFACE REGION, IN PARTICULAR FOR A MOTOR VEHICLE
ÉLÉMENT DE SURFACE COMPRENANT AU MOINS UNE ZONE DE SURFACE STRUCTURÉE, EN PARTICULIER POUR UN VÉHICULE AUTOMOBILE

(30) Priorität: 27.02.2012 DE 102012202958
(43) Veröffentlichungstag der Anmeldung: 07.01.2015
(73) Patentinhaber: Bayerische Motoren Werke Aktiengesellschaft, 80809 München (DE)
(72) Erfinder: VOLLMER, Guido, 81549 München (DE)
(86) Internationale Anmeldenummer: PCT/EP2013/053935
(87) Internationale Veröffentlichungsnummer: WO 2013/127854

(56) Entgegenhaltungen:
- DE-U1-202009 004 224
- JP-A- 2006 068 972
- US-A1- 2005 003 146
- US-A1- 2006 134 381

## Beschreibung

Die Erfindung betrifft ein Oberflächenelement mit wenigstens einem strukturierten Oberflächenbereich, insbesondere für ein Kraftfahrzeug, mit den im Oberbegriff des Patentanspruches 1 angegebenen Merkmalen.

Ein derartiges Oberflächenelement ist in der DE 10 2008 032 106 A1 an einem Kasten, insbesondere Flaschen- oder Transportkasten vorgesehen, der einen Kastengrundkörper aus einem ersten Kunststoff aufweist. Auf einer Seitenwand ist eine Immouldfolie angeordnet, deren Oberfläche ein Relief mit zumindest einer Erhöhung und/oder zumindest einer Vertiefung aufweist. Nach einer Ausgestaltung ist die zumindest eine Vertiefung zumindest teilweise mit einer Überdeckung aus einem zweiten Kunststoff überdeckt, wobei zur Verbindung des ersten und zweiten Kunststoffes ein Primer bzw. Haftvermittler vorgesehen ist. Eine weitere Ausgestaltung sieht vor, dass das Relief durch den ersten Kunststoff und/oder durch ein weiteres Material und/oder die Immouldfolie gebildet ist. Die zumindest eine Erhöhung ist nicht von dem zweiten Kunststoff überdeckt. Der Kasten soll einfach und kostengünstig zu fertigen sein und eine größere Gestaltungsfreiheit insbesondere der Seitenflächen zulassen. Derartige Kästen sollen einen Transport der darin mitgeführten Ware zu einem Abnehmer ermöglichen, ohne dass die Ware beschädigt wird. Dabei wird normal in Kauf genommen, dass der betreffende Kasten und sein Relief geringfügig beschädigt, beispielsweise verkratzt wird. Das durch relativ großflächige Erhöhungen und Vertiefungen gebildete Relief auf dem Kasten dient eher zu Information über den Hersteller oder Vertreiber der mitgeführten oder einer anderen Ware. Durch die großflächigen Erhöhungen und Vertiefungen ist es ohne weiteres möglich, dass Körperteile wie zum Beispiel Fingernägel oder kantige Gegenstände an den Erhöhungen und Vertiefungen zur Anlage kommen und diese sichtbar und eventuell optisch störend verkratzen.

Die DE 20 2009 004 224 betrifft ein Instrumententafelbauteil mit einer Abdeckung, die eine Blindlochstruktur mit einer Vielzahl von Vertiefungen aufweist. Ein Lochgrund der Vertiefungen ist derart ausgebildet, dass eine diffuse Lichtbrechung entsteht und damit eine mattierte Anmutung einer Oberfläche der Abdeckung im Bereich der Blindlochstruktur erzielt wird.

Die JP 2006 068 972 A betrifft eine Form zum Formen von Harz mit einer glanzreduzierten Oberfläche mit einer Vielzahl von Vorsprüngen, die durch Ätzen ausgebildet wurden.

Ferner betrifft die US 2006/134381 A1 eine Abdeckungsfolie mit einem hochglänzenden Bereich und einem weniger glänzenden Bereich. Der weniger glänzende Bereich hat ein Muster mit erhöhten Abschnitten und vertieften Abschnitten, wobei die erhöhten Abschnitte glänzend und die vertieften Abschnitte eher matt ausgebildet sind.

Darüber hinaus betrifft die US 2005/003146 A1 eine Oberfläche, die im Hinblick auf Reibung und Strömungsmechanik verbessert ist. Dabei ist die Oberfläche mit einer hierfür geeigneten Struktur versehen.

Es ist die Aufgabe der vorliegenden Erfindung, ein Oberflächenelement mit strukturierten Oberflächenbereichen, insbesondere für ein Kraftfahrzeug, zu schaffen, wobei der Aufbau des Oberflächenbereichs einfach ist und gegenüber sichtbaren Beschädigungen durch beispielsweise Verkratzen mit einem Gegenstand bei gleichzeitig glänzender (lichtreflektierender) Oberfläche geschützt ist.

Diese Aufgabe ist durch die Merkmale im Patentanspruch 1 gelöst. Vorteilhafte Ausgestaltungen der Erfindung sind den Unteransprüchen entnehmbar.

Das insbesondere für ein Kraftfahrzeug vorgesehene Oberflächenelement weist wenigstens einen strukturierten Oberflächenbereich auf, der durch jeweils einen Abstand voneinander aufweisende Erhöhungen und dazwischen befindliche Vertiefungen gebildet ist. Die Erhöhungen sind im Wesentlichen in einem derart eher geringen Abstand voneinander angeordnet und weisen eine solche Höhe gegenüber den Vertiefungen auf, dass beim Überstreichen des Oberflächenelements mit einem Gegenstand der Gegenstand nicht oder nicht ohne weiteres an den Boden der Vertiefungen gelangen und dabei eventuell verkratzen kann. Der Boden der Vertiefungen bleibt dadurch zumindest über eine abschätzbare Zeitdauer im Wesentlichen unverletzt. Die jeweils an eine Vertiefung angrenzenden Erhöhungen sind mit ihren hochliegenden Flächen als Opferflächen vorgesehen, die beim Überstreichen des Oberflächenbereiches des Oberflächenelements mit einem beispielsweise spitzen oder kantigen Gegenstandes und/oder mit einem Fingernagel einer Person verkratzt werden können. Damit diese hochliegenden und eventuell nach einiger Zeit verkratzten hoch liegenden Flächen der Erhöhungen nicht als verkratzt erkannt werden, sind die hoch liegenden Flächen der Erhöhungen vorzugsweise matt oder anderweitig unauffällig, lichtbrechend, ausgebildet. Mit der Erfindung wird das optische Erscheinungsbild des strukturierten Oberflächenbereich des Oberflächenelements derart manipuliert, dass im Wesentlichen lediglich die optisch ansprechenden Bodenflächen der Vertiefungen wahrgenommen werden, jedoch nicht oder kaum die lichtbrechenden, eventuell verkratzten Oberflächenbereiche der Erhöhungen. Hierzu sind die Bodenflächen der Vertiefungen hochglänzend schwarz, weiß oder farbig vorzugsweise dekorativ und/oder mit einer möglichst größeren Fläche gegenüber den höchsten Flächen der Erhöhungen ausgebildet, die ebenfalls dekorativ, beispielsweise unauffällig gestaltet sein können. Ein gleichmäßiger oder ungleichmäßiger Abstand der Erhöhungen und/oder Vertiefungen und/oder eine gleiche oder ungleiche Höhe der Erhöhungen und/oder eine gleiche oder ungleiche Tiefe der Vertiefungen und/oder eine zumindest bereichsweise regelmäßige oder unregelmäßige Anordnung gleicher oder ähnlicher Oberflächenstrukturen mit eigenen Erhöhungen und Vertiefungen kann an den jeweiligen Anwendungsfall angepasst werden.

Drei Ausführungsbeispiele der Erfindung werden anhand einer Zeichnung näher erläutert. Es zeigen
- Fig. 1: ein erstes Ausführungsbeispiel eines Oberflächenelements mit ähnlichen, zueinander verdrehten Oberflächenbereichen,
- Fig. 2: ein zweites Ausführungsbeispiel eines Oberflächenelements mit symmetrisch kreisförmig angeordneten Oberflächenbereichen und
- Fig. 3: ein drittes Ausführungsbeispiel eines Oberflächenelements mit unregelmäßig linienförmig angeordneten Oberflächenbereichen.

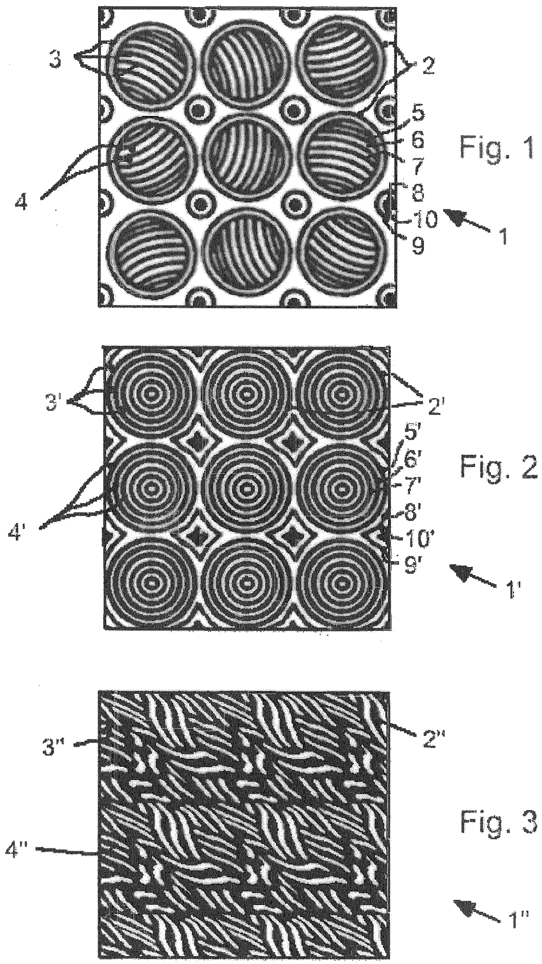

In Figur 1 ist gemäß einem ersten Ausführungsbeispiel ein Oberflächenelement 1 mit mehreren strukturierten Oberflächenbereichen 2 sehr vereinfacht dargestellt. Um die Übersichtlichkeit nicht zu beinträchtigen, sind von den Oberflächenbereichen lediglich einige mit einer Bezugszahl versehen. Die strukturierten Oberflächenbereiche 2 bilden bereichsweise ähnliche, zueinander verdrehte größere Figuren und dazwischen befindliche kleinere Figuren, die jeweils durch Erhöhungen 3 und Vertiefungen 4 bis 9 gebildet sind. Die lediglich teilweise mit einer Bezugszahl versehenen Erhöhungen 3 und Vertiefungen 4 bis 9 können gleichmäßig oder ungleichmäßig verteilte, beispielsweise wie bei dem Ausführungsbeispiel zumindest bereichsweise ähnliche Figuren bilden.

Das bei dem ersten Ausführungsbeispiel aus einem schwarzen Kunststoff einteilig gebildete Oberflächenelement 1 ist beispielsweise an einem Armaturenbrett oder an der Innenseite einer Fahrzeugtür jeweils eines Kraftfahrzeugs angeordnet.

Die Erhöhungen 3 können zumindest bereichsweise eine gleiche und/oder ungleiche Höhe gegenüber mehreren Vertiefungen 4 bis 9 und /oder einen gleichen und/oder ungleichen Abstand voneinander aufweisen. Die beispielsweise mittels einem Laser oder durch Ätzen oder Erodieren oder durch Druckbelastung beispielweise in einem Spritzgusswerkzeug eines eventuell vorgewärmten Werkzeugs gebildeten Vertiefungen 4 bis 9 sind in der Figur schwarz dargestellt und weisen bei dem Ausführungsbeispiel durch das gewählte Fertigungsverfahren jeweils eine hochglänzende Bodenfläche auf.

Die durch weiße bzw. helle Oberflächenbereiche dargestellten Erhöhungen 3 sind im Wesentlichen in einem derart eher geringen, gleichmäßigen und ungleichmäßigen Abstand voneinander angeordnet und weisen eine solche gleiche oder ungleiche Höhe gegenüber den Vertiefungen 4 bis 9 auf, dass beim Überstreichen des Oberflächenbereiches 2 des Oberflächenelements 1 mit einem beispielsweise spitzen oder kantigen Gegenstand oder mit einem Fingernagel einer Person, der Gegenstand oder Fingernagel an den Erhöhungen 3 abgleitet und dadurch nicht oder nicht ohne weiteres an den Boden der schwarz dargestellten Vertiefungen 4 bis 9 des Oberflächenbereiches 2 gelangen und dabei den Boden einer Vertiefung 4 bis 9 verkratzen kann.

Die Erhöhungen 3 sind bei dem Ausführungsbeispiel nicht mit einer Schutzschicht überdeckt und können deshalb beim Überstreichen des strukturierten Oberflächenbereiches mit einem beispielsweise spitzen oder kantigen Gegenstand oder mit einem Fingernagel einer Person verkratzt werden.

Damit eventuelle Kratzer an den sichtbaren Oberflächen der Erhöhungen 3 von einem Betrachter nicht erkannt oder auffällig wahrgenommen werden, sind die Bodenflächen der Vertiefungen 4 bis 9 auffällig beispielsweise hochglänzend schwarz ausgebildet und weisen entgegen der Darstellung in Fig. 1 eine gegenüber den weiß bzw. hell dargestellten Oberflächen der Erhöhungen 3 eine größere Fläche auf. Außerdem sind die in der Figur weiß bzw. hell dargestellten Oberflächen der Erhöhungen 3 beispielsweise matt oder anders derart unauffällig ausgebildet, dass Kratzer in den Oberflächen der Erhöhungen 3 nicht oder nicht wesentlich wahrgenommen werden.

Bei dem ersten Ausführungsbeispiel sind die größeren Figuren des strukturierten Oberflächenbereiches 2 des Oberflächenelements 1 durch zwei mit unterschiedlichen Durchmessern kreisringförmig geschlossene, schwarz dargestellte Vertiefungen 5, 6 und gekrümmte Linienbereiche bildende Vertiefungen 7 in der einen inneren Kreis bildenden Vertiefung 6 gebildet, zwischen denen sich jeweils eine weiß bzw. hell dargestellte Erhöhung 3 befindet, die an die Vertiefungen 5, 6, 7 angepasst ebenfalls kreisförmig geschlossen ausgebildet sind bzw. Linienbereiche bilden. Die kreisförmig geschlossenen Linienbereiche befinden sich jeweils in einer Höhen- bzw. Tiefenlage und erscheinen dadurch auch optisch sichtbar über einen Umfang geschlossen.

Die zwischen den größeren Figuren befindlichen kleineren Figuren der strukturierten Oberflächenbereiche 2 des Oberflächenelements 1 sind bei dem Ausführungsbeispiel jeweils durch eine kreisringförmige, schwarz dargestellte Vertiefung 8 und eine darin befindliche kreisförmige, ebenfalls schwarz dargestellte andere Vertiefung 9 sowie eine dazwischen befindliche, weiß bzw. hell dargestellte Erhöhung 10 gebildet. Zwischen den größeren und kleineren Figuren des strukturierten Oberflächenbereiches 2 befinden sich weiß bzw. hell dargestellte Erhöhungen, die entgegen der vereinfachten Darstellung in Fig. 1 eine gegenüber den schwarz dargestellten Bodenflächen der Vertiefungen 4 bis 9 kleinere Fläche bilden.

Das Oberflächenelement 1 wird bei dem Ausführungsbeispiel unter Verwendung eines Werkzeugs mittels einem Spritzgießverfahren oder durch Druckverformung gefertigt. Die den strukturierten Oberflächenbereich 2 des Oberflächenelements 1 bestimmende Struktur des Werkzeugs ist beispielsweise mittels einem Laserverfahren oder Ätzverfahren oder durch Gravieren gebildet. Um die Bodenflächen der Vertiefungen 4 bis 9 beispielsweise als Hochglanzflächen auszubilden, können die Bodenflächen beispielsweise mittels einer Politur behandelt oder durch Laserpolitur gebildet sein.

Das in Fig. 2 dargestellte zweite Ausführungsbeispiel eines Oberflächenelements 1' mit strukturierten Oberflächenbereichen 2' weist mit dem ersten Ausführungsbeispiel vergleichbare Merkmale auf, die zur Vermeidung einer wiederholten Beschreibung mit einer gleichen Bezugszahl und zur Unterscheidung bei dem zweiten Ausführungsbeispiel mit einem zugeordneten hoch gestellten Zeichen versehen sind.

Das Oberflächenelement 1' sieht bei diesem Ausführungsbeispiel ebenfalls mehrere, etwa gleich strukturierte Oberflächenbereiche 2' vor, die größere Figuren mit wechselweise kreisringförmigen Erhöhungen 3' und Vertiefungen 4' bis 7' aufweisen, die bei jeder Figur mit unterschiedlichen Durchmessern konzentrisch angeordnet sind. Um die Übersichtlichkeit nicht zu beinträchtigen, sind von den Oberflächenbereichen 2' lediglich einige mit einer Bezugszahl versehen. Zwischen den größeren Figuren sind kleinere, sternförmige Figuren, die ebenfalls durch wechselweise angeordnete Erhöhungen 3', 10' und Vertiefungen 8' und 9' gebildet sind. Die lediglich teilweise mit einer Bezugszahl versehenen Erhöhungen 3', 10' und Vertiefungen 4' bis 9' können gleichmäßig oder ungleichmäßig verteilte, beispielsweise wie bei dem Ausführungsbeispiel zumindest bereichsweise ähnliche Figuren bilden.

Das bei dem zweiten Ausführungsbeispiel ebenfalls aus einem schwarzen Kunststoff einteilig gebildete Oberflächenelement 1' ist beispielsweise an einem Armaturenbrett oder an der Innenseite einer Fahrzeugtür jeweils eines Kraftfahrzeugs angeordnet.

Die Erhöhungen 3', 10' können zumindest bereichsweise eine gleiche und/oder ungleiche Höhe gegenüber mehreren Vertiefungen 4' bis 9' und/oder einen gleichen und/oder ungleichen Abstand voneinander aufweisen. Die beispielsweise mittels einem Laser oder durch Ätzen oder Erodieren oder durch Druckbelastung eines eventuell vorgewärmten Werkzeugs gebildeten Vertiefungen 4' bis 9' sind in der Figur schwarz dargestellt und weisen durch das gewählte Fertigungsverfahren jeweils eine hochglänzende Bodenfläche auf.

Die durch weiße bzw. helle Oberflächenbereiche dargestellten Erhöhungen 3', 10' sind im Wesentlichen in einem derart eher geringen, gleichmäßigen und ungleichmäßigen Abstand voneinander angeordnet und weisen eine solche gleiche oder ungleiche Höhe gegenüber den Vertiefungen 4' bis 9' auf, dass beim Überstreichen des Oberflächenbereiches 2' des Oberflächenelements 1' mit einem beispielsweise spitzen oder kantigen Gegenstand oder mit einem Fingernagel einer Person, der Gegenstand oder Fingernagel an den Erhöhungen 3' abgleitet und dadurch nicht oder nicht ohne weiteres an den Boden der schwarz dargestellten Vertiefungen 4' bis 9' des Oberflächenbereiches 2' gelangen und dabei den Boden einer Vertiefung 4' bis 9' verkratzen kann.

Die Erhöhungen 3', 10' sind bei dem Ausführungsbeispiel nicht mit einer Schutzschicht überdeckt und können deshalb beim Überstreichen des strukturierten Oberflächenbereiches mit einem beispielsweise spitzen oder kantigen Gegenstand oder mit einem Fingernagel einer Person verkratzt werden.

Damit eventuelle Kratzer an den sichtbaren Oberflächen der Erhöhungen 3', 10' von einem Betrachter nicht erkannt oder auffällig wahrgenommen werden, sind die Bodenflächen der Vertiefungen 4' bis 9' auffällig beispielsweise hochglänzend schwarz ausgebildet und weisen eine - in Fig. 2 nicht ohne weiteres erkennbar - gegenüber den weiß bzw. hell dargestellten Oberflächen der Erhöhungen 3', 10' größere Fläche auf. Außerdem sind die in der Figur weiß bzw. hell dargestellten Oberflächen der Erhöhungen 3', 10' beispielsweise matt oder anders derart unauffällig ausgebildet, dass Kratzer in den Oberflächen der Erhöhungen 3', 10' nicht oder nicht wesentlich wahrgenommen werden.

Ein drittes, in Fig. 3 dargestelltes Ausführungsbeispiel eines Oberflächenelements 1" weist ebenfalls mit dem ersten Ausführungsbeispiel vergleichbare Merkmale auf, die zur Vermeidung einer wiederholten Beschreibung mit einer gleichen Bezugszahl und zur Unterscheidung bei dem dritten Ausführungsbeispiel mit einem zugeordneten hoch gestellten Zeichen versehen sind.

Das Oberflächenelement 1" sieht bei diesem Ausführungsbeispiel einen ungleich strukturierten Oberflächenbereich 2" vor, der wechselweise mit ungleichen Abständen angeordnete Erhöhungen 3" und Vertiefungen 4" aufweist. Die lediglich teilweise mit einer Bezugszahl versehenen Erhöhungen 3" und Vertiefungen 4" können auch gleichmäßig oder ungleichmäßig verteilte Gruppen bzw. Figuren bilden.

Das bei dem dritten Ausführungsbeispiel ebenfalls aus einem schwarzen Kunststoff einteilig gebildete Oberflächenelement 1" ist beispielsweise an einem Armaturenbrett oder an der Innenseite einer Fahrzeugtür jeweils eines Kraftfahrzeugs angeordnet.

Die Erhöhungen 3" können zumindest bereichsweise eine gleiche und/oder ungleiche Höhe gegenüber mehreren Vertiefungen 4" und/oder einen gleichen und/- oder ungleichen Abstand voneinander aufweisen. Die beispielsweise mittels einem Laser oder durch Ätzen oder Erodieren oder durch Druckbelastung eines eventuell vorgewärmten Werkzeugs gebildeten Vertiefungen 4" sind in der Figur schwarz dargestellt und weisen durch das gewählte Fertigungsverfahren jeweils eine hochglänzende Bodenfläche auf.

Die durch weiße bzw. helle Oberflächenbereiche dargestellten Erhöhungen 3" sind im Wesentlichen in einem derart eher geringen, gleichmäßigen und ungleichmäßigen Abstand voneinander angeordnet und weisen eine solche gleiche oder ungleiche Höhe gegenüber den Vertiefungen 4" auf, dass beim Überstreichen des Oberflächenbereiches 2" des Oberflächenelements 1" mit einem beispielsweise spitzen oder kantigen Gegenstand oder mit einem Fingernagel einer Person, der Gegenstand oder Fingernagel an den Erhöhungen 3" abgleitet und dadurch nicht oder nicht ohne weiteres an den Boden der schwarz dargestellten Vertiefungen 4" des Oberflächenbereiches 2" gelangen und dabei den Boden einer Vertiefung 4" verkratzen kann.

Die Erhöhungen 3" sind bei dem Ausführungsbeispiel nicht mit einer Schutzschicht überdeckt und können deshalb beim Überstreichen des strukturierten Oberflächenbereiches mit einem beispielsweise spitzen oder kantigen Gegenstand oder mit einem Fingernagel einer Person verkratzt werden.

Damit eventuelle Kratzer an den sichtbaren Oberflächen der Erhöhungen 3" von einem Betrachter nicht erkannt oder auffällig wahrgenommen werden, sind die Bodenflächen der Vertiefungen 4" auffällig beispielsweise hochglänzend schwarz ausgebildet und weisen eine - in Fig. 3 nicht ohne weiteres erkennbar - gegenüber den weiß bzw. hell dargestellten Oberflächen der Erhöhungen 3" größere Fläche auf. Außerdem sind die in der Figur weiß bzw. hell dargestellten Oberflächen der Erhöhungen 3" beispielsweise matt oder anders derart unauffällig ausgebildet, dass Kratzer in den Oberflächen der Erhöhungen 3" nicht oder kaum wahrgenommen werden.

Die Erfindung ist selbstverständlich von den drei Ausführungsbeispielen abweichend ausführbar. Das Oberflächenelement mit wenigstens einem strukturierten Oberflächenbereich ist beliebig, insbesondere für ein Kraftfahrzeug verwendbar. Der wenigstens eine strukturierte Oberflächenbereich des Oberflächenelements weist jeweils einen Abstand voneinander aufweisende Erhöhungen und dazwischen befindliche Vertiefungen auf. Die Erhöhungen sind im Wesentlichen in einem derart eher geringen Abstand voneinander angeordnet und weisen eine solche Höhe gegenüber den Vertiefungen auf, dass beim Überstreichen des Oberflächenelements mit einem Gegenstand der Gegenstand nicht oder nicht ohne weiteres an den Boden der Vertiefungen gelangen kann. Die Erhöhungen können zumindest bereichsweise eine gleiche und/oder ungleiche Höhe gegenüber mehreren Vertiefungen und/oder einen gleichen und/oder ungleichen Abstand voneinander aufweisen. Außerdem können die Erhöhungen und/oder Vertiefungen gleichmäßig oder ungleichmäßig verteilte, zumindest bereichsweise ähnliche Oberflächenstrukturen bilden, die beispielsweise optisch ansprechend wirken und/oder in Ihrer Anordnung optisch sichtbare Figuren bzw. Strukturen bilden. Beispielsweise können die Erhöhungen eine Höhe zwischen 10 und 200 Mikrometern, insbesondere zwischen 50 und 100 Mikrometern, aufweisen. Die Abstände von lediglich durch eine Vertiefung voneinander getrennten Erhöhungen bzw. die Abstände von lediglich durch eine Erhöhung getrennten Vertiefungen können beispielsweise 150 bis 200 Mikrometern oder mehr betragen. Die geringeren Werte ergeben sich dadurch, dass die Breite einer durch ein Laserverfahren gebildeten Vertiefung derzeit nicht kleiner als 100 Mikrometer gebildet werden kann. Sollten mit einem Laserverfahren oder einem anderen Verfahren auch geringere Breiten der Vertiefungen zu fertigen sein, so können diese geringeren Breiten ebenfalls realisiert werden. Soll durch die Bodenflächen der Vertiefungen beispielsweise ein optisch ansprechendes Erscheinungsbild vermittelt werden, so sind die Breiten der Vertiefungen vorzugsweise größer als die Breiten der Erhöhung zu wählen. Die Abstände von bereichsweise ähnlichen Oberflächenstrukturen können beispielsweise dem 5- bis 10-fachen der durchschnittlichen Höhe der Erhöhungen entsprechen, wobei sich bei einem kleineren Vielfachen ein besserer Kratzschutz für den strukturierten Oberflächenbereich ergibt. Die Erhöhungen und/oder Vertiefungen können beispielsweise zumindest bereichsweise in der Form beliebige Punkte- und/oder Linien- und/oder Flächenbereiche bilden. Beispielsweise zumindest einige Linien- und/oder Flächenbereiche können etwa in einer Höhenlage über einen Umfang geschlossen angeordnet sein und dadurch optisch als eine über einen Umfang geschlossene Figur erscheinen. Beispielsweise zumindest innerhalb von über einen Umfang geschlossenen Flächen- und/oder Linienbereichen kann zumindest ein weiterer Flächen- und/oder Linienbereich oder ein punktförmiger Bereich angeordnet sein. Oberflächenbereiche des Oberflächenelements können zueinander ähnlich ausgebildet und in etwa gleichen oder unterschiedlichen Abständen zueinander strukturiert positioniert und/oder zueinander etwa gleichmäßig oder unterschiedlich verdreht angeordnet sein. Das Oberflächenelement kann beispielsweise unter Verwendung eines Werkzeugs durch eine Druckverformung beispielsweise in einem Spritzgießwerkzeug im Wesentlichen aus Kunststoff, Metall oder Keramik gefertigt oder zusätzlich einteilig ausgebildet sein. Selbstverständlich ist eine andere Ausbildung ebenfalls möglich. Die den strukturierten Oberflächenbereich des Oberflächenelements bestimmende Struktur des Werkzeugs kann beispielsweise mittels einem Laserverfahren oder Ätzverfahren oder durch Gravieren gebildet sein. Um die Bodenflächen des strukturierten Oberflächenbereiches beispielsweise als Hochglanzflächen auszubilden, können die Bodenflächen beispielsweise mittels einer Politur behandelt oder durch Laserpolitur gebildet sein. Die Bodenflächen der Vertiefungen können beispielsweise strukturiert sein. Das Oberflächenelement kann an seinen die Erhöhungen bildenden Oberflächenbereichen beispielsweise strukturiert und/oder lichtbrechend und/oder matt oder anderweitig vorzugsweise derart unauffällig ausgebildet sein, dass eventuelle Kratzer in den Oberflächen der Erhöhungen optisch nicht oder kaum störend wirken. Ein in Querrichtung der beispielsweise linienförmig ausgebildeten Erhöhungen bewirkter Kratzer jeweils in der Oberfläche einiger Erhöhungen ist durch die zwischen den Erhöhungen befindlichen Vertiefungen ein- oder mehrfach unterbrochen, so dass die gesamte Kratzspur des Kratzers in den Oberflächen der Erhöhungen jeweils lediglich kurze Kratzspuren hinterlassen kann. Das Oberflächenelement kann mit oder ohne eine Oberflächenschutzschicht ein- oder mehrteilig beispielsweise durch eine einzige lichtundurchlässige schwarze, weiße oder farbige Kunststoffschicht gebildet oder aus einem ein- oder mehrteiligen Metall oder aus Keramik gefertigt sein. Mittlerweile ist es auch möglich, Metall bzw. Keramik durch Spritzgießen zu fertigen und dabei zu formen. Die Oberflächen der Erhöhungen und/oder die Bodenflächen der Vertiefungen können beispielsweise auch lackiert sein.

Oberflächenelement mit wenigstens einem strukturierten Oberflächenbereich, insbesondere für ein Kraftfahrzeug

## Patentansprüche

1. Oberflächenelement mit wenigstens einem strukturierten Oberflächenbereich, insbesondere für ein Kraftfahrzeug, der durch jeweils einen Abstand voneinander aufweisende Erhöhungen und dazwischen befindliche Vertiefungen gebildet ist, **dadurch gekennzeichnet, dass** die Erhöhungen (3, 3', 3", 10, 10') im Wesentlichen in einem derart geringen Abstand voneinander angeordnet sind und eine solche Höhe gegenüber den Vertiefungen (4 bis 9, 4' bis 9', 4") aufweisen, dass beim Überstreichen des Oberflächenelements (1, 1', 1") mit einem Gegenstand der Gegenstand nicht oder nicht ohne weiteres an den Boden der Vertiefungen (4 bis 9, 4' bis 9', 4") gelangen kann, wobei die Böden hochglänzend ausgebildet sind und wobei hoch liegende Flächen der Erhöhungen lichtbrechend ausgebildet sind.

2. Oberflächenelement nach Anspruch 1, **dadurch gekennzeichnet, dass** die Erhöhungen (3, 3', 3", 10, 10') zumindest bereichsweise eine gleiche und/oder ungleiche Höhe gegenüber wenigstens einer Vertiefung (4 bis 9, 4' bis 9', 4") und/oder einen gleichen und/oder ungleichen Abstand voneinander aufweisen.

3. Oberflächenelement nach Anspruch 2, **dadurch gekennzeichnet, dass** die Erhöhungen (3, 3', 3", 10, 10') und/oder Vertiefungen (4 bis 9, 4' bis 9', 4") gleichmäßig oder ungleichmäßig verteilte, zumindest bereichsweise ähnliche Figuren bilden.

4. Oberflächenelement nach Anspruch 2 oder 3, **dadurch gekennzeichnet, dass** die Erhöhungen (3, 3', 3", 10, 10') und/oder Vertiefungen (4 bis 9, 4' bis 9', 4") zumindest bereichsweise einen in der Form beliebigen Flächen- und/oder Linienbereich bilden.

5. Oberflächenelement nach Anspruch 4, **dadurch gekennzeichnet, dass** zumindest einige Flächen- und/oder Linienbereiche bildende Erhöhungen (3, 3', 3", 10, 10') und/oder Vertiefungen (4 bis 8, 4' bis 8', 4") etwa in einer Höhenlage über einen Umfang geschlossen angeordnet sind und dadurch optisch über einen Umfang geschlossen erscheinen.

6. Oberflächenelement nach Anspruch 5, **dadurch gekennzeichnet, dass** zumindest innerhalb einiger über einen Umfang geschlossenen Flächen- und/oder Linienbereiche bildenden Erhöhungen (3, 3', 3", 10, 10') und/oder Vertiefungen (4 bis 8, 4' bis 8', 4") zumindest ein weiterer Flächen- und/oder Linienbereich oder ein punktförmiger Bereich angeordnet ist.

7. Oberflächenelement nach einem der Ansprüche 4 bis 6, **dadurch gekennzeichnet, dass** Oberflächenbereiche (2, 2', 2") des Oberflächenelements (1, 1', 1") zueinander ähnlich ausgebildet und in etwa gleichen oder unterschiedlichen Abständen zueinander strukturiert positioniert und/oder zueinander etwa gleichmäßig oder unterschiedlich verdreht angeordnet sind.

8. Oberflächenelement nach einem der Ansprüche 1 bis 7, **dadurch gekennzeichnet, dass** das Oberflächenelement (1, 1', 1") mittels einem Werkzeug durch ein Spritzgießverfahren oder ein Druckverfahren im Wesentlichen aus Kunststoff, Metall oder Keramik gefertigt oder zusätzlich einteilig ausgebildet ist.

9. Oberflächenelement nach Anspruch 8, **dadurch gekennzeichnet, dass** die den strukturierten Oberflächenbereich (2, 2', 2") des Oberflächenelements (1, 1', 1") bestimmende Struktur des Werkzeugs mittels einem Laserverfahren oder Ätzverfahren oder durch Gravieren gebildet ist.

10. Oberflächenelement nach einem der Ansprüche 1 bis 9, **dadurch gekennzeichnet, dass** das Oberflächenelement (1, 1', 1") jeweils zumindest bereichsweise an seinen die Vertiefungen (4 bis 9, 4' bis 9', 4") bildenden Oberflächenbereichen (4 bis 9, 4' bis 9', 4") strukturiert und/oder glänzend oder hochglänzend und/oder an seinen die Erhöhungen (3, 3', 3", 10, 10') bildenden Oberflächenbereichen (4 bis 9, 4' bis 9', 4") strukturiert und/oder lichtbrechend und/oder matt ausgebildet ist.

11. Oberflächenelement nach einem der Ansprüche 1 bis 10, **dadurch gekennzeichnet, dass** das Oberflächenelement (1, 1', 1") ohne eine Oberflächenschutzschicht einteilig durch eine lichtundurchlässige schwarze, weiße oder farbige Kunststoff-, Metall- oder Keramikschicht gebildet ist.

## Claims

1. A surface element having at least one structured surface region, in particular for a motor vehicle, which structured surface region is formed by elevations which are in each case at a spacing from one another and depressions which are situated between them, **characterised in that** the elevations (3, 3', 3", 10, 10') are arranged substantially at such a small spacing from one another and which have a height with respect to the depressions (4 to 9, 4' to 9', 4") such that, when the surface element (1, 1', 1") is swept over by an object, the object cannot reach, or cannot readily reach, the bottom of the depressions (4 to 9, 4' to 9', 4"), wherein the bottoms are formed with a glossy finish and wherein the high-lying surfaces of the elevations are refractively formed.

2. A surface element according to Claim 1, **characterised in that** the elevations (3, 3', 3", 10, 10') have, at least zonally, an identical and/or non-identical height in relation to at least one depression (4 to 9, 4' to 9', 4") and/or an identical and/or non-identical spacing from one another.

3. A surface element according to Claim 2, **characterised in that** the elevations (3, 3', 3", 10, 10') and/or depressions (4 to 9, 4' to 9', 4") form equally or unequally distributed figures that are at least zonally similar.

4. A surface element according to Claim 2 or 3, **characterised in that** the elevations (3, 3', 3", 10, 10') and/or depressions (4 to 9, 4' to 9', 4"), at least zonally, form a surface and/or line region of any shape.

5. A surface element according to Claim 4, **characterised in that** at least some elevations (3, 3', 3", 10, 10') and/or depressions (4 to 8, 4' to 8', 4") forming surface and/or line regions are arranged approximately closed over a circumference at an elevation and thus appear optically closed over a circumference.

6. A surface element according to Claim 5, **characterised in that** at least one further surface and/or line region or a punctiform region is arranged in at least some elevations (3, 3', 3", 10, 10') and/or depressions (4 to 8, 4' to 8', 4") forming surface and/or line regions closed over a circumference.

7. A surface element according to one of Claims 4 to 6, **characterised in that** surface regions (2, 2', 2") of the surface element (1, 1', 1") are formed in a similar way to one another and are positioned structured at more or less the same or different spacing from one another and/or are arranged more or less equally or variably twisted in relation to one another.

8. A surface element according to one of Claims 1 to 7, **characterised in that** the surface element (1, 1', 1") is manufactured essentially from plastic, metal or ceramic by means of an injection moulding process or a printing process with a tool or is also formed in one piece.

9. A surface element according to Claim 8, **characterised in that** the structure of the tool determining the structured surface region (2, 2', 2") of the surface element (1, 1', 1") is formed using a laser or etching process or through engraving.

10. A surface element according to one of Claims 1 to 9, **characterised in that** the surface element (1, 1', 1") is, at least zonally on its surface regions (4 to 9, 4' to 9', 4") forming the depressions (4 to 9, 4' to 9', 4"), designed to be textured and/or glossy or high gloss, and/or, on its surface regions (4 to 9, 4' to 9', 4") forming the elevations (3, 3', 3", 10, 10'), is designed to be textured and/or refractive and/or matt.

11. A surface element according to one of Claims 1 to 10, **characterised in that** the surface element (1, 1', 1") without a surface protective layer is formed in one piece by an opaque black, white or coloured plastic, metal or ceramic layer.

## Revendications

1. Elément de surface ayant au moins une zone structurée destinée en particulier à un véhicule qui est formée par des bossages respectivement situés à distance les uns des autres et par des renfoncements situés entre ces bossages,
**caractérisé en ce que**
les bossages (3, 3', 3", 10, 10') sont essentiellement situés à une faible distance les uns des autres et présentent une hauteur par rapport aux renfoncements (4 à 9, 4' à 9', 4") choisies de sorte que lors d'un balayage de l'élément de surface (1, 1', 1") avec un objet, cet objet ne puisse pas ou ne puisse pas facilement atteindre les fonds des renfoncements (4 à 9, 4' à 9', 4"), ces fonds étant très brillants et les surfaces supérieures des bossages ayant un haut pouvoir de réfraction.

2. Elément de surface conforme à la revendication 1,
**caractérisé en ce que**
les bossages (3, 3', 3", 10, 10') ont au moins par zones une hauteur égale et/ou différente par rapport à au moins un renfoncement (4 à 9, 4' à 9', 4"), et/ou sont à une distance égale et/ou différente les uns par rapport aux autres.

3. Elément de surface conforme à la revendication 2,
**caractérisé en ce que**
les bossages (3, 3', 3", 10, 10') et/ou les renfoncements (4 à 9, 4' à 9', 4") qui sont répartis de manière régulière ou irrégulière forment au moins par zones des figures similaires.

4. Elément de surface conforme à la revendication 2 ou 3,
**caractérisé en ce que**
les bossages (3, 3', 3", 10, 10') et/ou les renfoncements (4 à 9, 4' à 9', 4") forment, au moins par zones une zone surfacique et/ou linéaire de forme quelconque.

5. Elément de surface conforme à la revendication 4,
**caractérisé en ce qu'**
au moins certains bossages (3, 3', 3", 10, 10') et/ou renfoncements (4 à 8, 4' à 8', 4") formant des zones surfaciques et/ou linéaires sont essentiellement positionnées dans une position en hauteur fermée sur une circonférence et semblent ainsi optiquement fermés sur une circonférence.

6. Elément de surface conforme à la revendication 5,
**caractérisé en ce qu'**
au moins à la partie interne de certains bossages (3, 3', 3", 10, 10') et/ou renfoncement (4 à 8, 4' à 8', 4") formant des zones surfaciques et/ou linéaires fermées sur une circonférence, est installée une autre zone surfacique et/ou linéaire ou une zone ponctuelle.

7. Elément de surface conforme à l'une des revendications 4 à 6,
**caractérisé en ce que**
des zones de surface (2, 2', 2") de l'élément de surface (1, 1', 1") sont réalisées de manière similaire et positionnées en étant structurées les unes par rapport aux autres à des distances essentiellement égales ou différentes et/ou sont positionnées les unes par rapport aux autres en étant tournées de manière essentiellement régulière ou irrégulière.

8. Elément de surface conforme à l'une des revendications 1 à 7,
**caractérisé en ce que**
l'élément de surface (1, 1', 1") est fabriqué en matière plastique, en métal ou en céramique, au moyen d'un outil, par un procédé de moulage par injection ou par un procédé d'impression essentiellement ou est en outre réalisé en une seule pièce.

9. Elément de surface conforme à la revendication 8,
**caractérisé en ce que**
la structure de l'outil déterminant la zone de surface structurée (2, 2', 2") de l'élément de surface (1, 1', 1") est formée par un procédé laser ou par un procédé d'attaque chimique ou par gravure.

10. Elément de surface conforme à l'une des revendications 1 à 9,
**caractérisé en ce que**
l'élément de surface (1, 1', 1") est respectivement réalisé au moins par zones sur ses zones de surface (4 à 9, 4' à 9', 4") formant les renfoncements (4 à 9, 4' à 9', 4"), en étant structuré, brillant ou très brillant, et/ou sur ses zones de surface (4 à 9, 4' à 9', 4") formant les bossages (3, 3', 3", 10, 10') et/ou en étant structuré avec un haut pouvoir de réfraction et/ou mat.

11. Elément de surface conforme à l'une des revendications 1 à 10,
**caractérisé en ce que**
l'élément de surface (1, 1', 1") est formé en une seule partie sans couche de protection de surface, par une couche de matériau synthétique, de métal ou de céramique noire blanche ou colorée, imperméable à la lumière.
